# EUROPEAN PATENT APPLICATION

(11) **EP 2 521 000 A2**
(43) Date of publication of application: **07.11.2012**
(21) Application number: 11193096.2
(22) Date of filing: 12.12.2011
(51) Int. Cl.: G06F 1/16

(54) **Multifunctional case for portable electronic device**

(30) Priority: 13.12.2010 TW 099143489
(71) Applicant: Chie Mei Communication Systems, New Taipei City 236, Taiwan R.O.C. (TW)
(72) Inventor: Lu, Li-Houng, Tu-Cheng, New Taipei (TW); Yang, Hsin-Yung, Tu-Cheng, New Taipei (TW); Lin, Ching-Min, Tu-Cheng, New Taipei (TW); Yu, Tzu-Cheng, Bao'an District, Shenzen City Guang Dong Province PSC 518109 (CN)
(74) Representative: Gray, John James

(57) **Abstract**

A multifunctional case is for receiving or supporting a portable electronic device and includes a bottom wall. The bottom wall includes a main supporting portion, two side supporting portions. The two side supporting portions are opposite to each other and are formed on two sides of the main supporting portion. The side supporting portions and the main supporting portion can define a three-dimensional space and simultaneously support the portable electronic device.

## Description

### BackGround

### Field

This disclosure relates to cases for portable electronic devices, particularly, to a multifunctional case for protecting and supporting portable electronic devices.

### BackGround

On one hand, cases are widely applied to protect portable electronic devices. On another hand, users generally need a holder for supporting the portable electronic device to read an eBook or watch video. However, it can be difficult to carry the case and the holder at the same time. In many cases, the holder can be easily left behind after use.

Therefore, there is room for improvement within the art.

### Summary

According to a first aspect of the disclosure, a multifunctional case is provided for receiving or supporting a portable electronic device. The multifunctional case comprises a bottom wall, the bottom wall comprises a base portion, a main supporting portion, two side supporting portions, and two bottom supporting portions. The two side supporting portions are positioned at two opposite sides of the main supporting portion. Each of the bottom supporting portions is positioned between the corresponding one side supporting portion and the base portion. The main supporting portion, two side supporting portions and two bottom supporting portions are configured to fold towards the base portion, cooperatively for supporting the portable electronic device.

According to a second aspect of the disclosure, a multifunctional protecting device for protecting or supporting a portable electronic device comprises a bottom wall. The bottom wall comprises a main supporting portion, two side supporting portions. The two side supporting portions are opposite to each other and are formed on two sides of the main supporting portion. The side supporting portions and the main supporting portion are configured to define a three-dimensional space and simultaneously support the portable electronic device.

According to a third aspect of the disclosure, a multifunctional protecting device for protecting or supporting a portable electronic device comprises a bottom wall. The bottom wall forms a first folding area, a second folding area, and a third folding area. The bottom wall can be folded along the first folding area, the second folding area, and the third folding area, folding the portions of the bottom wall between the first folding area, the second folding area, and the third folding area. The folded portions of the bottom wall are for supporting the portable electronic device.

According to a fourth aspect of the disclosure, a multifunctional protecting device for protecting or supporting a portable electronic device comprises a bottom wall. The bottom wall is made of soft material that can be folded, and the bottom wall has a supporting assembly attached therewith. The supporting assembly is made of rigid material that cannot be folded, and is maintained in a two-dimensional form when the multifunctional protecting device is for protecting the portable electronic device. The supporting assembly can be enabled in a three-dimensional form for supporting the portable electronic device by folding the bottom wall.

### BRIEF DESCRIPTION OF THE DRAWINGS

Many aspects of the multifunctional case can be better understood with reference to the following drawings. The components in the drawings are not necessarily drawn to scale, the emphasis instead being placed upon clearly illustrating the principles of the multifunctional case.

FIG. 1 is an isometric view of a multifunctional case, in accordance with an exemplary embodiment.

FIG. 2 is similar to FIG. 1, but shown from another aspect.

FIG. 3 is similar to FIG. 2, showing the multifunctional case in a state of being folded.

FIG. 4 is similar to FIG. 3, showing the multifunctional case folded as a support.

FIG. 5 is similar to FIG. 4, showing a portable electronic device supported by the multifunctional case.

FIG. 6 is similar to FIG. 1, showing the multifunctional case receiving a portable electronic device therein.

FIG. 7 is an isometric view of another multifunctional case, in accordance with another exemplary embodiment.

### DETAILED DESCRIPTION

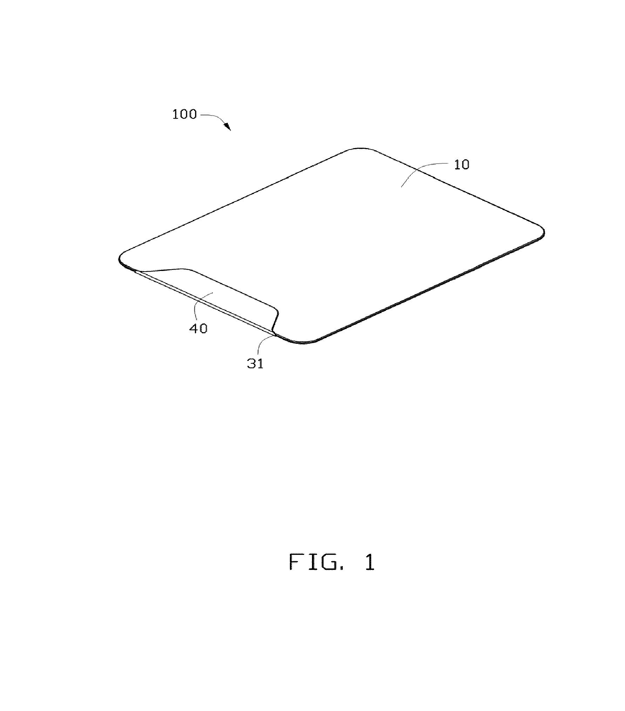

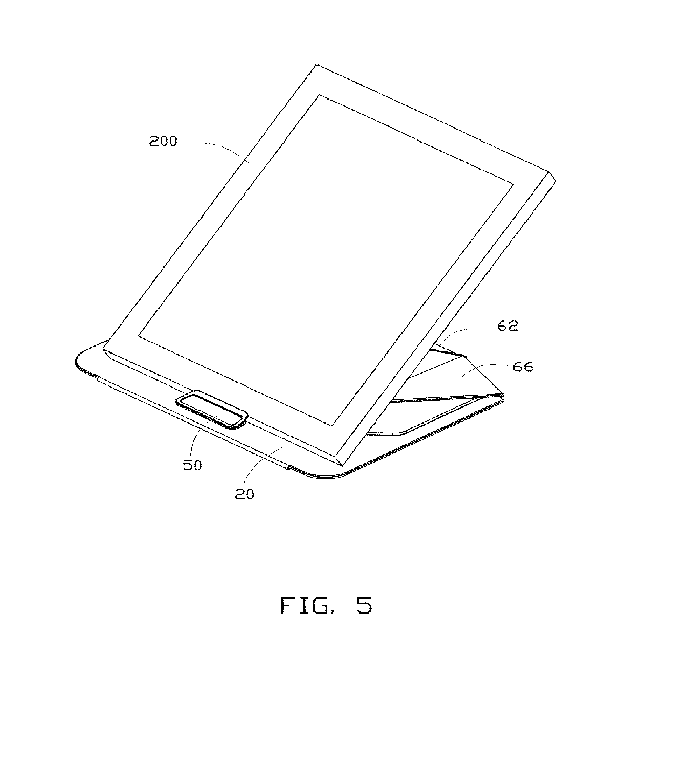

FIGS. 1 and 5 show an exemplary embodiment of a multifunctional case 100. The case 100 is selectively used to receive or support a portable electronic device 200 such as an electronic pad. When receiving the portable electronic device 20 therein, the case 100 may act as a multifunctional protecting device.

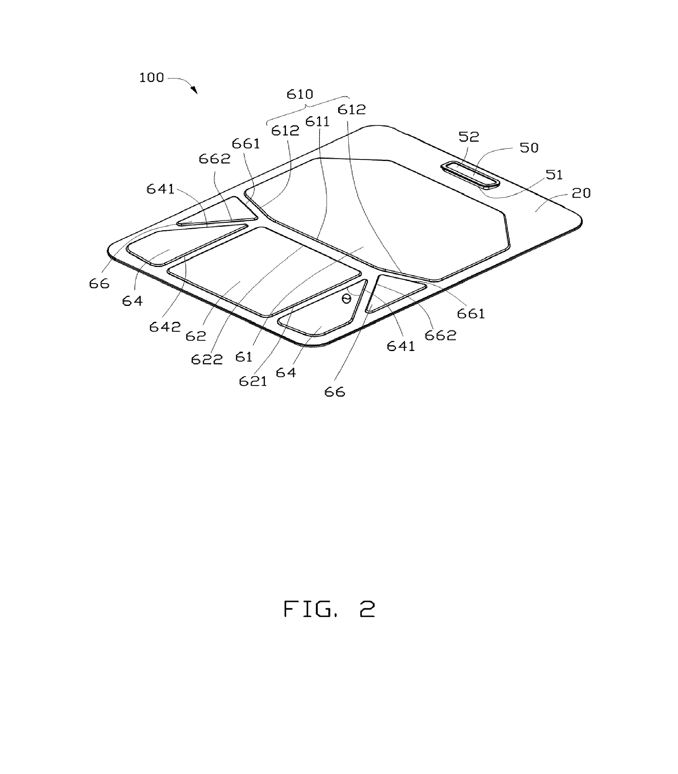

Also referring to FIG. 2, the case 100 includes an upper wall 10, a bottom wall 20 and a closing portion 40. A receiving space (not labeled) is enclosed by the upper wall 10 and the bottom wall 20 for receiving the portable electronic device 200. The upper wall 10 and the bottom wall 20 are connected to each other by their edges, leaving an opening 31 that allows the portable electronic device 200 to be inserted into the receiving space. The first and bottom walls 10 and 20 are made of soft material that can be folded, selected from a group consisting of fiber, cotton, vinyl, thermoplastics.

The closing portion 40 is flexible and is used to close the opening 31. The closing portion 40 may extend from the bottom wall 20 to be positioned adjacent to the opening 31.

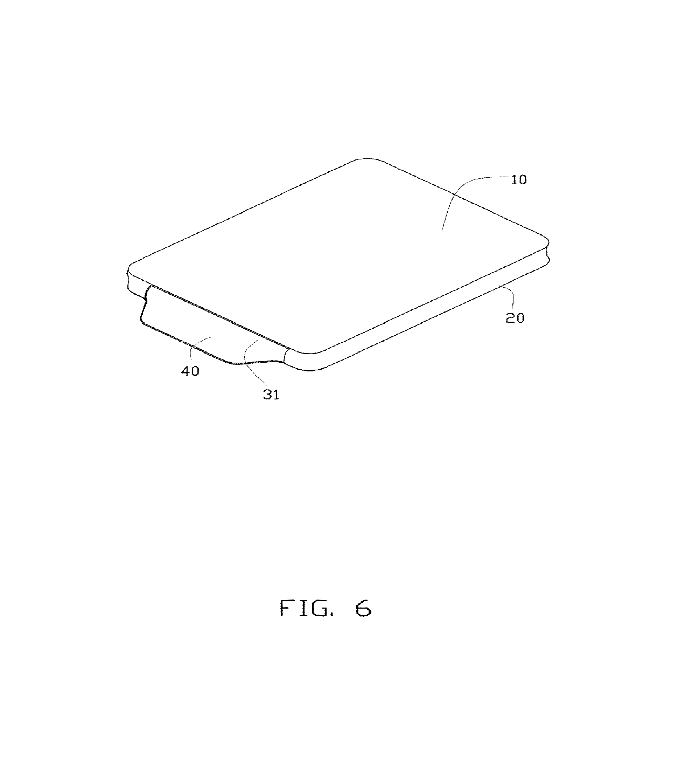

The bottom wall 20 form a locking member 50, a base portion 61, a main supporting portion 62, two side supporting portions 64 and two bottom supporting portions 66. In this exemplary embodiment, the portions 61, 62, 64, 66 are formed on the bottom wall 20. The locking member 50 is positioned adjacent to the opening 31. The locking member 50 includes a head 52 resisting against one end of the portable electronic device 200 (best seen figure 6). A slot 51 corresponding to the locking member 50 is defined between the head 52 and the bottom wall 20 to lock an end of the portable electronic device 200. The locking member 50 can be folded or rotated relative to the bottom wall 20 about an axis defined by the adjoining portion of the bottom wall 20 and the end portion of the locking member 50.

The portions 61, 62, 64, 66 can be made of rigid materials that cannot be folded so that the portions 61, 62, 64, 66 can act as a supporting assembly maintained in a two-dimensional form when the case 100 is for protecting the portable electronic device, and further the supporting assembly can be enabled in a three-dimensional form for supporting the portable electronic device 200 by folding the bottom wall 20. The portions 61, 62, 64, 66 are arranged on the outer surface of the bottom wall 20 and are separated from each other. It is to be understood that the portions 61, 62, 64, 66 may be embedded in the bottom wall 20. The portions 62, 64, 66 are arranged on the same side of the portion 61. The portions 61, 62, 64, 66 are symmetrically positioned about a longitudinal center line of the bottom wall 20. The base portion 61 includes a baseline 610 at one edge thereof. The baseline 610 includes a middle portion 611 and two end portions 612. The main supporting portion 62 is generally rectangular and faces the middle portion 611 of the base portion 61. The main supporting portion 62 has two side edges 621 and two end edges 622. The edges 622 are parallel to the middle portion 611 of the baseline 610.

The two side supporting portions 64 are respectively positioned at two sides of the main supporting portion 62. Each side supporting portion 64 includes a sloping edge 641 and a bottom edge 642. The sloping edge 641 is obliquely angled with respect to the bottom edge 642. In this embodiment, the angle θ between the sloping edge 641 and the bottom edge may be about 30 degrees to about 60 degrees. The bottom edge 642 is adjacent to and parallel to one of the side edges 621 of the main supporting portion 62.

The bottom supporting portion 66 is positioned between the base portion 61 and the corresponding side supporting portion 64. Each bottom supporting portion 66 includes a first edge 661 and a second edge 662. The first edge 661 is adjacent to and parallel to the corresponding end portion 612 of the base portion 61. The second edge 662 is adjacent to and parallel to the sloping edge 641 of the corresponding side supporting portion 64.

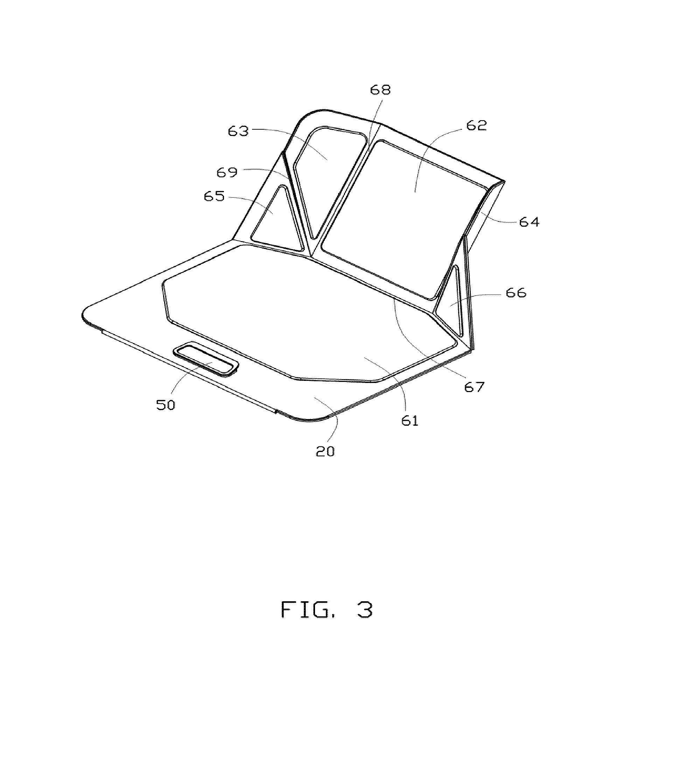

Referring to FIG. 3, the space between the bottom supporting portions 66 and the base portion 61 and the space between the main supporting portion 62 and the base portion 61 together form a first folding area 67. The first folding area 67 is transversely arranged along the bottom wall 20. A space between the side supporting portion 64 and the main supporting portion 62 forms a second folding area 68. The second folding areas 68 are generally parallel with each other are arranged longitudinally along the bottom wall 20. A space between the side supporting portion 64 and the bottom supporting portion 66 forms a third folding area 69. The third folding area 69 is arranged between the first folding area 67 and the second folding area 68. The third folding areas 69 may extend towards each other. Each third folding area 69 and the corresponding one second folding area 68 extend to intersect the third folding area 69.

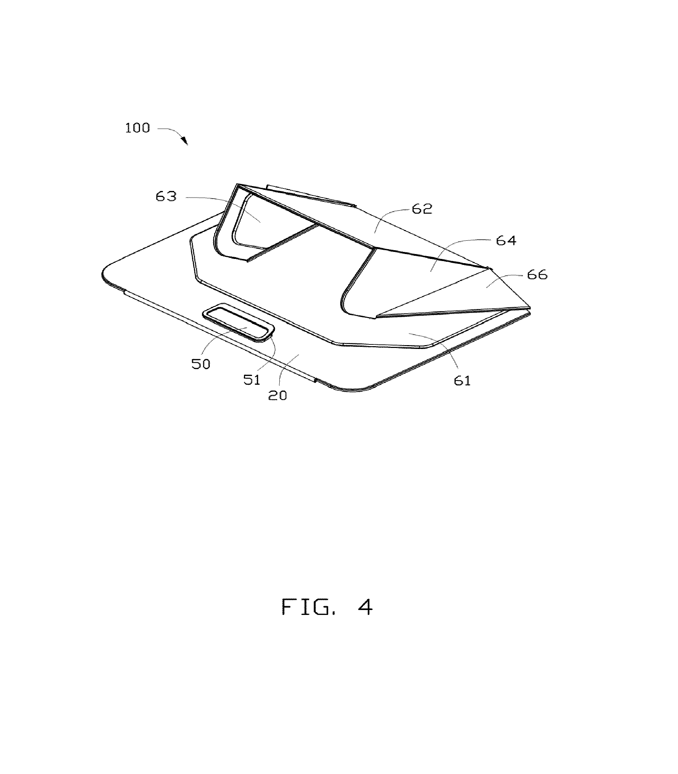

Also referring to FIG. 4, to fold the case 100 to be a support or a cradle, the bottom supporting portions 66 and the main supporting portion 62 are folded toward the base portion 61 along the first folding area 67. The two bottom supporting portions 66 are positioned on the base portion 61, bringing the side supporting portions 64 to rotate relative to the second and third folding areas 69 at the same time. At last, the side supporting portions 64 are retained generally perpendicular to the base portion 61 and the main supporting portion 62. The main supporting portion 62 is at an acute angle θ with the base portion 61. It is to be understood that at this time, the side supporting portions 64 and the main supporting portion 62 define a three-dimensional space above the bottom wall 20 and is simultaneously for supporting portable electronic device 200. The bottom supporting portions 66 and the base portion 61 can be omitted, because the side supporting portions 64 and the main supporting portion 62 in three-dimensional form construct a supporting assembly providing a sufficient supporting force for supporting the portable electronic device 200.

Referring to FIG. 5, the portable electronic device 200 is set on the case 100 as a support or a cradle. On end of the portable electronic device 200 is locked in the slot 51 of the locking member 50. The portable electronic device 200 is supported by the main supporting portions 62 and the side supporting portions 64 at an angle. Thus, users can comfortably view the display of the portable electronic device 200.

Referring to FIG. 6, after viewing the display of the device 200, the closing portion 40 is opened to expose the opening 31. The device 200 is inserted into the receiving space of the case 100 via the opening 31.

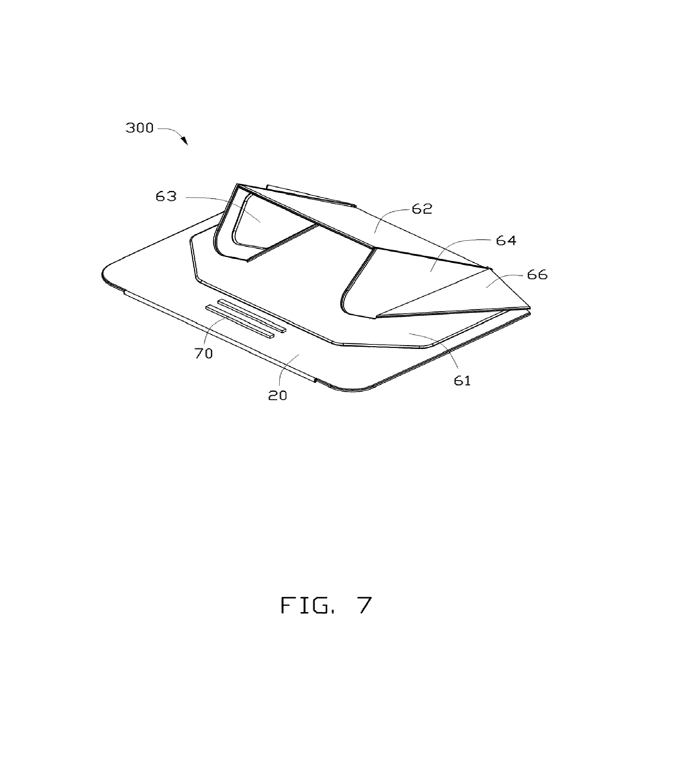

FIG. 7 shows another exemplary embodiment of a multifunctional case 100. The structure of the case 300 is similar to case 100 except that a plurality of parallel bars 70 are protruding from the bottom wall 20 to replace the locking member 50. The bars 70 are spaced from each other. Thus, users can select one of the bars 70 to resist the device 200 to select the angle for viewing the display.

It is to be understood that even though numerous characteristics and advantages of the present embodiments have been set forth in the foregoing description, together with details of the structures and functions of the embodiments, the disclosure is illustrative only, and changes may be made in detail, especially in matters of shape, size, and arrangement of parts within the principles of the disclosure to the full extent indicated by the broad general meaning of the terms in which the appended claims are expressed.

## Claims

1. A multifunctional case for receiving or supporting a portable electronic device, comprises a bottom wall, **characterized in that**: the bottom wall comprises a base portion, a main supporting portion, two side supporting portions, and two bottom supporting portions, the two side supporting portions are positioned at two opposite sides of the main supporting portion, each of the bottom supporting portions is positioned between the corresponding one side supporting portion and the base portion, the main supporting portion , two side supporting portions and two bottom supporting portions are configured to fold towards the base portion, cooperatively for supporting the portable electronic device.

2. The multifunctional case as claimed in claim 1, **characterized in that**: the two side supporting portions are configured to fold towards each other and fold relative to the two bottom supporting portions and the main supporting portion.

3. The multifunctional case as claimed in claim 1, **characterized in that**: the base portion, the main supporting portion, the two side supporting portions, and the two bottom supporting portions are separated from each other, the main supporting portion, the two side supporting portions, and the two bottom supporting portions are arranged on the same side of the base portion.

4. The multifunctional case as claimed in claim 3, **characterized in that**: the bottom wall forms a first folding area defined by the base portion and the combination of the main supporting portion and the two bottom supporting portions, the bottom wall forms a second folding area defined by the two side supporting portions and the main supporting portion, and the bottom wall further forms a third folding area defined by the bottom supporting portions and the side supporting portions.

5. The multifunctional case as claimed in claim 3, **characterized in that**: the base portion defines a baseline extending along the bottom wall and including a middle portion facing the main supporting portion, and two end portions, the two end portions connecting two opposite ends of the middle portion, facing the two bottom supporting portion and extending away from the main supporting portion and the two side supporting portions.

6. The multifunctional case as claimed in claim 5, **characterized in that**: each of the bottom supporting portion includes a first edge and a second edge connecting the first edge, the first edge is adjacent to and parallel to the corresponding one end portion of the baseline, the side supporting portion includes a sloping edge adjacent to and parallel to the second edge, the side supporting portion further includes a bottom edge, and the main supporting portion further includes a side edge adjacent to and parallel to the bottom edge, the sloping edge is obliquely angled with respect to the bottom edge.

7. The multifunctional case as claimed in claim 1, further comprises an upper wall, the upper wall connects the bottom wall, both of which enclose a receiving space for receiving the portable electronic device.

8. The multifunctional case as claimed in claim 1, **characterized in that**: the bottom wall forms a locking member facing the base portion, the locking member configured to lock an end of the portable electronic device when the portable electronic device is supported.

9. The multifunctional case as claimed in claim 8, **characterized in that**: the locking member includes a head, and a slot is defined between the head and the bottom wall to lock an end of the portable electronic device.

10. The multifunctional case as claimed in claim 8, **characterized in that**: the locking member includes a plurality of bars protruding from the bottom wall.

11. The multifunctional case as claimed in claim 1, **characterized in that**: the main supporting portion, two side supporting portions and two bottom supporting portions are configured that in case of supporting, the bottom supporting portions attach with the base portion, each of the side supporting portions has an end resisting against the base portion, retaining the main supporting portion at an acute angle relative to the base portion.

12. A multifunctional protecting device for protecting or supporting a portable electronic device comprises a bottom wall, **characterized in that**: the bottom wall comprises a main supporting portion, two side supporting portions, the two side supporting portions are opposite to each other and are formed on two sides of the main supporting portion, the side supporting portions and the main supporting portion are configured to define a three-dimensional space and simultaneously support the portable electronic device.

13. The multifunctional protecting device as claimed in claim 12, **characterized in that**: for supporting the portable electronic device, each of the side supporting portions has an end resisting against the bottom wall, retaining the main supporting portion at an acute angle relative to the bottom wall.

14. The multifunctional protecting device as claimed in claim 12, **characterized in that**: the bottom wall further comprises a base portion, the main supporting portion, the side supporting portions are configured to fold relative to the base portion.

15. The multifunctional protecting device as claimed in claim 14, **characterized in that**: the bottom wall further comprises two bottom supporting portions formed between the side supporting portions and the base portion, two bottom supporting portions are capable of folding relative to the base portion.

16. The multifunctional protecting device as claimed in claim 14, **characterized in that**: the main supporting portion, the two side supporting portions, and the two bottom supporting portions are arranged on the same side of the base portion, the bottom wall further includes a locking member on the other opposite side of the base portion, the locking member locking the portable electronic device when the portable electronic device is supported by the main supporting portion and the two side supporting portions.

17. A multifunctional protecting device, for protecting or supporting a portable electronic device, comprises a bottom wall, **characterized in that**: the bottom wall forms a first folding area, a second folding area, and a third folding area, the bottom wall can be folded along the first folding area, the second folding area, and the third folding area, folding the portions of the bottom wall between the first folding area, the second folding area, and the third folding area, the folded portions of the bottom wall are for supporting the portable electronic device.

18. The multifunctional protecting device as claimed in claim 17, **characterized in that**: the first folding area is transversely arranged along the bottom wall, the second folding areas are separated and arranged longitudinally along the bottom wall, and the third folding areas are separated and arranged between the first folding area and the second folding areas.

19. The multifunctional protecting device as claimed in claim 18, **characterized in that**: the third folding areas extend towards each other, each third folding area and the corresponding one second folding area extend to intersect the third folding area.

20. The multifunctional protecting device as claimed in claim 17, **characterized in that**: the folded portions of the bottom wall comprise a base portion and a main supporting portion and two bottom supporting portions, the first folding area is defined by the base portion and the combination of the main supporting portion and the two bottom supporting portions, the base portion and the main supporting portion and the two bottom supporting portions can fold relative to each other by folding the first folding area.

21. The multifunctional protecting device as claimed in claim 20, the folded portions of the bottom wall comprise two side supporting portions, the second folding area is defined by the two side supporting portions and the main supporting portion, the third folding area is defined by the bottom supporting portions and the side supporting portions, the main supporting portion, the side supporting portions, and the bottom supporting portions can fold relative to each other by folding the first folding area and the second folding area.

22. The multifunctional protecting device as claimed in claim 17, the folded portions of the bottom wall comprise a base portion and a main supporting portion, two bottom supporting portions, and two side supporting portions, all of which are arranged to define the first folding area, the second folding area, and the third folding area in such position that the two side supporting portions are positioned at two opposite sides of the main supporting portion, each of the bottom supporting portions is positioned between the corresponding one side supporting portion and the base portion.

23. A multifunctional protecting device, for protecting or supporting a portable electronic device, comprises a bottom wall, **characterized in that**: the bottom wall is made of a soft material that can be folded, the bottom wall has a supporting assembly attached therewith, the supporting assembly is made of a rigid material that cannot be folded, the supporting assembly is maintained in a two-dimensional form when the multifunctional protecting device is for protecting the portable electronic device, the supporting assembly can be enabled in a three-dimensional form for supporting the portable electronic device by folding the bottom wall.

24. The multifunctional protecting device as claimed in claim 23, **characterized in that**: the supporting assembly comprises a main supporting portion, two side supporting portions, the two side supporting portions are opposite to each other and formed on two sides of the main supporting portion, the area adjacent to the combination of the main supporting portion and the two side supporting portions form a first folding area of the bottom wall, the area between each side supporting portion and the main supporting portion form a second folding area of the bottom wall.

25. The multifunctional protecting device as claimed in claim 24, **characterized in that**: the supporting assembly further comprises two bottom supporting portions formed between the side supporting portions and the base portion, the area between the each side supporting portion and the corresponding one bottom supporting portion form a third folding area of the bottom wall.
